# EUROPEAN PATENT SPECIFICATION

(11) **EP 3 955 145 B1**
(45) Date of publication and mention of the grant of the patent: **05.03.2025**
(21) Application number: 21182646.6
(22) Date of filing: 30.06.2021
(51) Int. Cl.: G06F 21/32, H04L 9/32, H04L 9/00, H04L 9/40

(54) **BLOCKCHAIN-BASED ELECTRONIC SIGNATURE METHOD AND APPARATUS**
BLOCKCHAINBASIERTES ELEKTRONISCHES SIGNATURVERFAHREN UND -GERÄT
PROCÉDÉ ET APPAREIL DE SIGNATURE ÉLECTRONIQUE FONDÉE SUR UNE CHAÎNE DE BLOCS

(30) Priority: 14.08.2020 CN 202010817872
(43) Date of publication of application: 16.02.2022
(73) Proprietor: Alipay (Hangzhou) Information Technology Co., Ltd., Hangzhou, Zhejiang 310000 (CN)
(72) Inventor: HE, Sanyuan, Hangzhou, 310000 (CN)
(74) Representative: Goddar, Heinz J.

(56) References cited:
- CN-A- 111 931 152
- US-A1- 2004 236 694
- US-A1- 2020 258 176
- US-B1- 10 671 712

## Description

### Technical Field

The present specification relates to the field of computer applications, and in particular, to a blockchain-based electronic signature method, device and computer program according to the appended claims.

### Background

The blockchain technology, also referred to as a distributed ledger technology, is an emerging technology in which several computing devices participate in "book-keeping" and jointly maintain a complete distributed database. The blockchain technology has characteristics of decentralization, openness, and transparency, each computing device can participate in database recording, and rapid data synchronization can be performed between computing devices, so that the blockchain technology has been widely used in many fields.

US 10,671,712 B1 discloses methods and systems to electronically notarize a document. A system can receive biometric information from a user, extract characteristics from the biometric information, and compare the characteristics of the biometric information with previously stored characteristics of the user's biometric information. When the characteristics of the biometric information match the previously stored characteristics to a threshold, the system can create an identity of the user using the characteristics of the biometric information. The system can send a document to the user for cryptographic signature and receive an indication that the document has been signed. The cryptographic signature can be generated with a digest of the document, the identity, and a cryptographic key associated with the user. The system can inspect the digest of the document, the cryptographic key, and the identity associated with the document to verify authenticity of the document and the identity of the user.

US 2020/0258176 A1 discloses a method for annotating or signing an electronic document. The method includes steps of: receiving or retrieving an electronic document available for annotation or execution by one or more parties; transmitting the electronic document for display on a first computing device to the first computing device at a first location; authenticating an identity of a first user of the first computing device; receiving electronic signals representing an user input of the first user from the first computing device; generating digital data representative of an indicia based the user input of the first user from the first computing device; and applying the digital data to the electronic document to form a first annotation or signature from the first user. A user authentication unit in a system platform is operable to register and authenticate users prior to providing access to applications, or documents. User authentication may be performed through biometric verification.

### Summary of the Invention

The invention is defined by the independent claims.

Preferred embodiments are recited in the dependent claims. Below, and in view of the above, a blockchain-based electronic signature method and apparatus are disclosed in the present specification.

According to a first aspect of embodiments of the present specification, a blockchain-based electronic signature method applied to a server is disclosed, and the method includes:
receiving an electronic signature authentication request sent by an electronic signature client, wherein the electronic signature client is bound to one or more legal signature users, and the electronic signature authentication request includes biometric information of a signature user collected by the electronic signature client;
in response to the electronic signature authentication request, authenticating whether the signature user is a legal signature user bound to the electronic signature client based on the biometric information; and if yes, returning an authentication result to the electronic signature client, so that the electronic signature client further prompts the signature user to perform an electronic signature operation in response to the authentication result; and
receiving an electronic signature submitted by the signature user and collected by the electronic signature client, and publishing the electronic signature to a blockchain for deposit.

According to a second aspect of the embodiments of the present specification, a blockchain-based electronic signature method applied to an electronic signature client to which one or more legal signature users are bound is disclosed, and the method includes:
collecting biometric information of a signature user;
sending an electronic signature authentication request carrying the biometric information to a server, so that the server, in response to the electronic signature authentication request, authenticates whether the signature user is a legal signature user bound to the electronic signature client based on the biometric information; and if yes, returns an authentication result to the electronic signature client;
in response to the authentication result, further prompting the signature user to perform an electronic signature operation, and collecting an electronic signature submitted by the signature user; and
sending the electronic signature to the server, so that the server publishes the electronic signature to a blockchain for deposit.

According to a third aspect of embodiments of the present specification, a blockchain-based electronic signature apparatus applied to a server is disclosed, and the apparatus includes:
an authentication request receiving module configured to receive an electronic signature authentication request sent by an electronic signature client, wherein the electronic signature client is bound to one or more legal signature users, and the electronic signature authentication request includes biometric information of a signature user collected by the electronic signature client;
a signature user authentication module configured to, in response to the electronic signature authentication request, authenticate whether the signature user is a legal signature user bound to the electronic signature client based on the biometric information; and if yes, return an authentication result to the electronic signature client, so that the electronic signature client further prompts the signature user to perform an electronic signature operation in response to the authentication result; and
an electronic signature deposit module configured to receive an electronic signature submitted by the signature user and collected by the electronic signature client, and publish the electronic signature to a blockchain for deposit.

According to a fourth aspect of the embodiments of the present specification, a blockchain-based electronic signature apparatus applied to an electronic signature client to which one or more legal signature users are bound is disclosed, and the apparatus includes:
a biometric information collection module configured to collect biometric information of a signature user;
an authentication request sending module configured to send an electronic signature authentication request carrying the biometric information to a server, so that the server, in response to the electronic signature authentication request, authenticates whether the signature user is a legal signature user bound to the electronic signature client based on the biometric information; and if yes, returns an authentication result to the electronic signature client;
an electronic signature collection module configured to, in response to the authentication result, further prompt the signature user to perform an electronic signature operation, and collect an electronic signature submitted by the signature user; and
an electronic signature sending module configured to send the electronic signature to the server, so that the server publishes the electronic signature to a blockchain for deposit.

In the above technical solutions, on the one hand, because the biometric information is used to verify the identity of the user participating in the signature before the electronic signature is performed, it is guaranteed that the sent electronic signature must come from the user himself/herself, thus preventing the electronic signature from being stolen and counterfeited.

On the other hand, the completed electronic signature will be sent to the blockchain for deposit, and the blockchain itself has the characteristics of being open and transparent and difficult to tamper with; therefore, it may curb a denial behavior of the user of not admitting the electronic signature issued by the user himself/herself.

### Brief Description of the Drawings

The accompanying drawings herein are incorporated into the specification and constitute a part of the present specification, show embodiments consistent with the present specification, and are used to explain the principles together with the text of the present specification.
FIG. 1 is an interactive flowchart of a blockchain-based electronic signature method according to the present specification;
FIG. 2 is a flowchart of a blockchain-based electronic signature method according to the present specification;
FIG. 3 is another flowchart of a blockchain-based electronic signature method according to the present specification;
FIG. 4 is a structural diagram of a blockchain-based electronic signature apparatus according to the present specification;
FIG. 5 is another structural diagram of a blockchain-based electronic signature apparatus according to the present specification;
FIG. 6 is a schematic structural diagram of a computing device configured to perform electronic signature according to the present specification; and
FIG. 7 is a schematic structural diagram of another computing device configured to perform electronic signature according to the present specification.

### Detailed Description

In order to enable those skilled in the art to better understand the technical solutions in one or more embodiments in the present specification, the technical solutions in the one or more embodiments of the present specification will be described clearly and completely with reference to the accompanying drawings in the one or more embodiments of the present specification. It is apparent that the described embodiments are merely some of rather than all the embodiments of the present annlication

When the following description involves the accompanying drawings, the same numerals in the different accompanying drawings indicate the same or similar elements, unless otherwise indicated. The implementation modes described in the following example embodiments do not represent all implementation modes consistent with the present specification. Instead, they are merely examples of systems and methods consistent with some aspects of the present specification as detailed in the appended claims.

The terminology used in the present specification is for the purpose of describing particular embodiments only, and is not intended to limit the present specification. The singular forms "a," "said," and "the" used in the present specification and the appended claims are also intended to include plural forms, unless other meanings are clearly indicated in the context. It should also be understood that the term "and/or" as used herein refers to and encompasses any or all possible combinations of one or more associated listed items.

It should be understood that although the terms first, second, third, etc. may be used to describe various information in the present specification, the information should not be limited to these terms. These terms are only used to distinguish the same type of information from each other. For example, without departing from the scope of the present specification, first information may also be referred to as second information, and similarly, the second information may also be referred to as the first information. Depending on the context, the word "if" as used herein may be interpreted as "at the time of" or "when" or "in response to determination."

The present specification aims to propose an electronic signature solution that can guarantee that users cannot deny and is difficult to be stolen or counterfeited.

In daily life, users often need to use signatures to confirm services when handling services. However, once a user's signature feature is stolen, there may be an error in which a signature of another person is also approved. This further leads to decline in credibility of the signature, even a real signature user may deny a previous signature.

For example, when handling a network access service at a business hall of an Internet Service Provider (ISP), a user is usually required to sign his/her name on a client terminal such as a tablet or handwriting pad, or sign the name on a paper contract which is then scanned for storage, so as to confirm that the processing of the above network access service is approved by the user himself/herself.

However, once the above signatures are counterfeited or stolen by others, it may cause losses to users and merchants. Moreover, since the signatures may be counterfeited, the credibility of the signatures may decline, and some users may deny previous signatures with the excuse that the signatures are stolen by others, and this will further cause the loss of merchants' interests.

Therefore, an electronic signature method that can guarantee that users cannot deny and is difficult to be stolen or counterfeited is in urgent need.

Based on the above problems, an electronic signature solution is proposed in the present specification, in which identity of a signature user is authenticated with the aid of the biometric technology, an electronic signature is performed after the authentication succeeds, and the completed signature is published to a blockchain for deposit.

During implementation, a legal signature user may be bound to an electronic signature client in advance, and store his/her own biometric information and the above binding relationship on a server, so that the identity of the signature user is authenticated through the biometric information in the subsequent process. After the signature is completed, a collected electronic signature may be published to a blockchain through the server to complete deposit.

In the above solution, on the one hand, the signature user must succeed in identity authentication before signing. If the signature user is not a user who is bound to the electronic signature client used, he/she will be failed in the biometric information authentication, and therefore cannot perform the signature action. Therefore, the electronic signature in the above solution is difficult to be counterfeited or stolen.

On the other hand, the completed electronic signature will be published to the blockchain for deposit, and the blockchain itself has the characteristics of being decentralized, open, and transparent, and difficult to tamper with; therefore, the electronic signature in the above solution cannot be denied once it is signed.

The blockchain is a data structure that can be used for deposit, and is generally classified into three types: Public Blockchain, Private Blockchain, and Consortium Blockchain. **In** addition, there may also be a combination of the above types, for example, private blockchain + consortium blockchain, consortium blockchain + public blockchain, and the like.

The most decentralized one is the public blockchain. The public blockchain is represented by Bitcoin and Ethereum. Participants who join the public blockchain (also referred to as nodes in the blockchain) can read data records on the blockchain, participate in transactions, compete for book-keeping rights of new blocks, and the like. Moreover, each node can freely join or exit the network and perform related operations.

The private blockchain is the opposite. A write permission of the network is controlled by an organization or institution, and a data read permission is regulated by the organization. In simple terms, a private blockchain may be a weakly centralized system with strict restrictions on nodes and a small number of nodes. This type of blockchain is more suitable for internal use by a specific institution.

The consortium blockchain is a blockchain between the public blockchain and the private blockchain, which may achieve "partial decentralization." Each node in the consortium blockchain usually has a corresponding entity or organization. The nodes are authorized to join the network and form an interests-related consortium to jointly maintain the operation of the blockchain.

Based on basic characteristics of the blockchain, a blockchain is usually composed of several blocks. Timestamps corresponding to creation time of blocks are recorded in these blocks respectively, and all the blocks strictly follow the timestamps recorded in the blocks to form a time-ordered data chain.

For real data generated in the physical world, it may be constructed into a standard transaction format supported by a blockchain, and then published to the blockchain. Node devices in the blockchain perform consensus processing on the received transaction, and after a consensus is reached, a node device serving as a book-keeping node in the blockchain packages the transaction into the block and performs persistent deposit in the blockchain.

Consensus algorithms supported in the blockchain may include:
a first type of consensus algorithm, that is, a consensus algorithm that node devices need to compete for the book-keeping right of each round of book-keeping cycle; for example, a consensus algorithms such as Proof of Work (POW), Proof of Stake (POS), and Delegated Proof of Stake (DPOS); and
a second type of consensus algorithm, that is, a consensus algorithm that pre-selects a book-keeping node for each round of book-keeping cycle (without the need of competing for the book-keeping right); for example, a consensus algorithm such as Practical Byzantine Fault Tolerance (PBFT).

In the blockchain network using the first type of consensus algorithm, all node devices that compete for the book-keeping right may execute a transaction after receiving the transaction. One of the node devices competing for the book-keeping right may win in this round and become the book-keeping node. The book-keeping node may package the received transaction together with other transactions to generate the latest block, and send the generated latest block or a block header of the latest block to other node devices for consensus.

In the blockchain network using the second type of consensus algorithm, a node device with the book-keeping right has been agreed before this round of book-keeping. Therefore, after a node device receives a transaction, if it is not the book-keeping node of this round, it may send the transaction to the book-keeping node. For the book-keeping node of this round, the transaction may be executed during or before the process of packaging the transaction together with other transactions to generate the latest block. After the latest block is generated, the book-keeping node may send the latest block or a block header of the latest block to other node devices for consensus.

As described above, regardless of the consensus algorithm adopted by the blockchain, the book-keeping node of this round can package the received transaction to generate the latest block, and send the generated latest block or a block header of the latest block to other node devices for consensus verification. After the latest block or the block header of the latest block is received, if it is verified by the other node device that there is no problem, the latest block may be appended to the end of the original blockchain to complete the book-keeping process of the blockchain. In the process of verifying a new block or block header sent by the book-keeping node, other nodes may also execute the transaction contained in the block.

As can be seen, publishing the electronic signature completed by the signature user to the blockchain for deposit may achieve the effect of public and persistent deposit.

The present specification is described below through specific embodiments in combination with specific application scenarios.

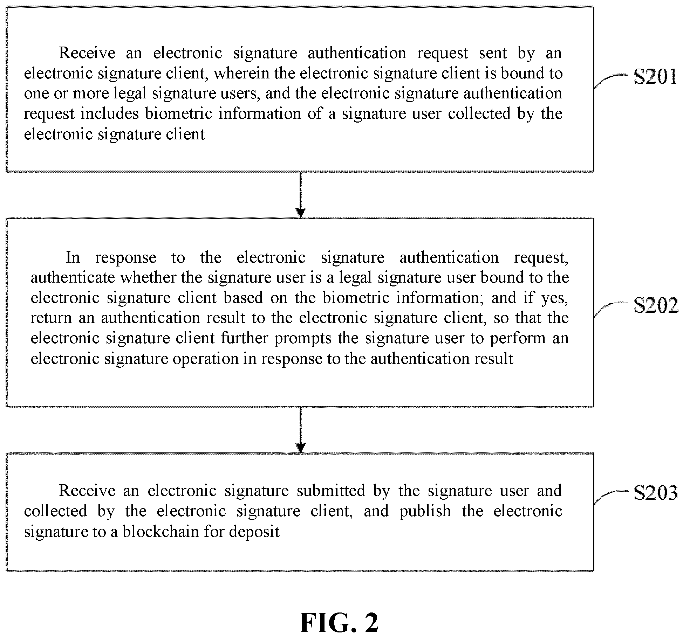

Please refer to FIG. 2, a flowchart of a blockchain-based electronic signature method proposed in the present specification at a server side is shown. In this example, the above method may include the following steps:
In S201, an electronic signature authentication request sent by an electronic signature client is received, wherein the electronic signature client is bound to one or more legal signature users, and the electronic signature authentication request includes biometric information of a signature user collected by the electronic signature client.
In S202, in response to the electronic signature authentication request, whether the signature user is a legal signature user bound to the electronic signature client is authenticated based on the biometric information; and if yes, an authentication result is returned to the electronic signature client, so that the electronic signature client further prompts the signature user to perform an electronic signature operation in response to the authentication result.
In S203, an electronic signature submitted by the signature user and collected by the electronic signature client is received, and the electronic signature is published to a blockchain for deposit.

The above biometric information may include any information that can reflect inherent physiological characteristics and/or behavioral features of a human body and can be used for identity recognition. It may include image information such as a fingerprint, an iris, and a face, may also include voice information, gait information, and the like, and may also include a combination of the above multiple types of biometric information, and the like. Therefore, the type of biometric information to be used does not need to be specifically limited in the present specification, and those skilled in the art may choose the biometric information to be used by themselves according to specific requirements.

In the illustrated implementation, the above biometric information may include a facial image. Specifically, the image may be a static single frame image, or it may be a multi-frame image or even a video. The multi-frame image or video carries more information, and therefore, the above biometric information may be made more reliable.

The above electronic signature includes any information that may be stored in a computer, can identify the identity of a user, and is used to indicate the corresponding user's confirmation of something. In a narrow sense, the signature may include a name or a preset text such as "Read" and "Agreed" of the user presented in handwriting. In a broad sense, the signature may include a seal, encryption hardware, a password private key, a dynamic password, and the like unique to the user. For example, the user's imprint on a contract with a company's official seal may also be regarded as a special form of signature, and the above imprint is recorded in a computer system by scanning, photographing, and the like, which may be regarded as an electronic signature.

The above electronic signature client may include any device or software that can interact with a signature user so that the signature user can use it to enter a signature and has the function of collecting biometric information. For example, a tablet computer with a front camera and a touch screen can acquire a facial image of a signature user by the camera and regard it as biometric information, and can also collect a signature handwriting written by the user by touching the touch screen, so it may be regarded as an electronic signature client.

For another example, an APP with a human voice collection function and a signature scanning function can collect the user's speech as biometric information through its human voice collection function, and can also scan an image of a paper signature to complete entering of the user signature, and therefore it may also be regarded as an electronic signature client.

The above server may include any form of server that can provide functions such as sending and receiving, authentication, and storage involved in the above solution. It may be a specific server, a server cluster, or a distributed cloud server. It is understandable that the above server may be interpreted as server hardware or server software. The specific implementation is not specifically limited in the present specification. Those skilled in the art can complete detailed designs with reference to related technologies and specific requirements.

The above blockchain may include any form of blockchain, either a public blockchain, a private blockchain, or a consortium blockchain. Since different types of blockchains have different advantages and disadvantages, those skilled in the art may choose the blockchain according to their specific needs. The type of the blockchain to be used in the above solution does not need to be limited in the present specification.

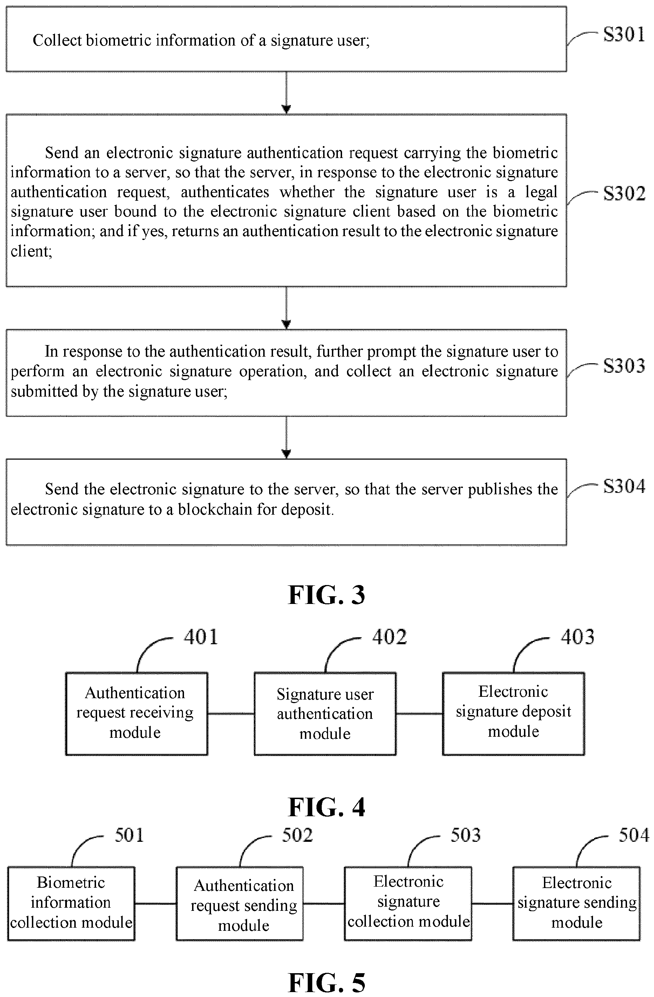

It is understandable that if the above method is specifically applied to the above electronic signature client, please refer to FIG. 3, a flowchart of the above blockchain-based electronic signature method at a client side is shown. In this example, the above method may include the following steps:
In S301, biometric information of a signature user is collected.
In S302, an electronic signature authentication request carrying the biometric information is sent to a server, so that the server, in response to the electronic signature authentication request, authenticates whether the signature user is a legal signature user bound to the electronic signature client based on the biometric information; and if yes, returns an authentication result to the electronic signature client.
In S303, in response to the authentication result, the signature user is further prompted to perform an electronic signature operation, and an electronic signature submitted by the signature user is collected.
In S304, the electronic signature is sent to the server, so that the server publishes the electronic signature to a blockchain for deposit.

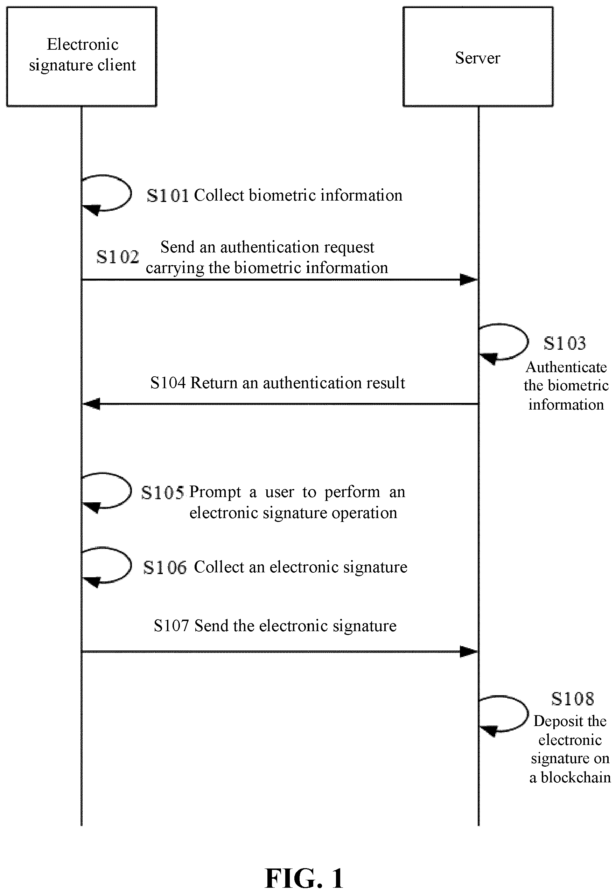

For the convenience of description, please refer to FIG. 1, an interactive flowchart of a blockchain-based electronic signature method according to an embodiment of the present specification is shown. The electronic signature method may include two parts: an authentication stage and a signature stage. The above authentication stage may specifically include the following steps:
In S101, biometric information is collected.

In the present specification, the above client may first collect biometric information of a signature user. Specifically, the specific method of collection may vary according to different types of biometric information. For example, in the case of using a facial image as the biometric information, the collection of a facial image of the signature user may be completed by calling a camera. In the case of using voice record as the biometric information, the collection of a voice signal of the signature user may be completed by calling a pickup. The specific method used to collect the above biometric information, as well as detailed software and hardware designs, may be completed by those skilled in the art with reference to relevant technical documents according to specific needs, which do not need to be limited in detail in the present specification.

In S102, an authentication request carrying the biometric information is sent.

In the present specification, after the above biometric information is collected, the electronic signature client may send an authentication request carrying the biometric information to the server to request the server to perform subsequent operations based on the biometric information. It is understandable that the above authentication request is not limited to a single message or request, but may also include a group of messages that complete the above functions. For example, the authentication request and the biometric information are encapsulated in two or more messages respectively, or the above two or more messages as a whole are regarded as the above authentication request carrying the biometric information.

In S103, the biometric information is authenticated.

In the present specification, the electronic signature client may be bound to one or more legal signature users in advance, and store the above binding relationships. It is understandable that the electronic signature client may naturally declare its own identity, that is, an identifier of the electronic signature client, to the server in the process of information exchange with the server, which may be reflected in any step of the information exchange, or client identity confirmation information may be sent separately. How to confirm the identity of the electronic signature client does not need to be limited in detail in the present specification.

In the present specification, on the premise that the identity of the electronic signature client is known, the legal signature user having a binding relationship with it may be found correspondingly. Further, according to the biometric information carried in the authentication request sent by the electronic signature client, it may be determined whether the user indicated by the biometric information carried in the authentication request, that is, the signature user, is a legal signature user bound to the electronic signature client.

In an illustrated implementation, the biometric information carried in the authentication request sent by the above electronic signature client may be matched with biometric information of a legal signature user bound to the above electronic signature client that is pre-stored in the server; and if the matching succeeds, it may be determined that the signature user is the legal signature user bound to the electronic signature client.

It is understandable that storing the biometric information of the legal signature user in the server is only an example implementation. In a practical application, the biometric information of the legal signature user may also be stored in another location, and the above task of determining whether the signature user is a legal signature user may be completed indirectly.

In another implementation, a biometric information database may be preset in the server, and the identity of the signature user may be determined by searching the biometric information database for the biometric information carried in the authentication request, which may be further combined with the above binding relationship between the legal signature user and the electronic signature client to complete the judgment on whether the signature user is a legal signature user bound to the above electronic signature client. More feasible implementations may be determined by those skilled in the art according to specific needs by themselves, which will not be repeated in the present specification.

In S104, an authentication result is returned.

In the present specification, if the above authentication result is yes, the server may return the authentication result to the electronic signature client. The authentication result may be in plain text, or encrypted or encoded. For example, if agreed in advance, if the above authentication result is yes, return information should carry corresponding return code, and the return information carrying the return code should also be understood as a special form of the above authentication result. Those skilled in the art can determine the specifically used communication protocol and the used status code to indicate different meanings according to specific needs, which do not need to be limited in detail here in the present specification.

So far, the authentication stage ends. Through the above authentication stage, it is ensured that only when the signature user succeeds in the authentication, that is, the signature user is indeed a legal signature user bound to the electronic signature client, the subsequent signature stage may be entered, thus ensuring that the electronic signature cannot be counterfeited or stolen.

It is understandable that an electronic signature client may be bound to multiple legal signature users, so that multiple persons may share a device or authorized signature may be performed. For example, a legal signature user A with a disability on both hands can authorize user B to become a legal signature user of the electronic signature client that has been bound to A, so that user B can succeed in the above biometric information authentication instead of himself/herself, and then complete the subsequent signature action. The authority management logic of the specific implementation may be obtained by those skilled in the art with reference to the relevant technical documents to complete the design, which does not need to be limited in detail in the present specification.

The above signature stage may include the following steps:
In S105, the user is prompted to perform an electronic signature operation.

In the present specification, the above electronic signature client may prompt the signature user to perform an electronic signature operation in response to the above authentication result. Specifically, the above prompt method may include one of the following manners such as a text field, a picture, a pop-up window, a notification, and a prompt sound, or a combination of multiple manners. Those skilled in the art can determine the used form of prompting method according to specific needs, which does not need to be further limited in the present specification.

In S106, an electronic signature is collected.

In the present specification, the electronic signature client may collect the electronic signature submitted by the user. Specifically, the collection means of the electronic signature may correspond to the form and characteristics of the electronic signature itself. For example, if the handwriting of a handwritten name is used as the electronic signature, a touch screen or a stylus/screen may be required as an input device, or a camera may need to be called to complete entering of the signature handwriting on a paper document. If a USB hardware key is used as the electronic signature, a corresponding USB communication module may be required to complete the electronic signature collection. Those skilled in the art may obtain the specifically used method for collecting the electronic signature with reference to related technologies to complete the specific design, which is not further limited in the present specification.

In S107, the electronic signature is sent.

In the present specification, after the electronic signature client collects the electronic signature submitted by the above signature user, it may send the electronic signature to the above server. Those skilled in the art may refer to related technologies to complete specific designs, which is not further limited in the present specification.

In S108, the electronic signature is deposited on a blockchain.

In the present specification, after the above server receives the electronic signature from the electronic signature client, it may publish the electronic signature to the blockchain for deposit. In a specific implementation, the server may be directly used as an on-blockchain node of the blockchain to broadcast a corresponding deposit transaction in the blockchain, and may also indirectly complete the above publishing and depositing steps by communicating with the node on the above blockchain. Those skilled in the art may refer to related technologies to complete the specific design, which is not further limited in the present specification.

Because the blockchain itself has the characteristics of being open, transparent, and difficult to tamper with, as long as the signature user submits the electronic signature through the above method, deposit information in the corresponding blockchain may become a credible evidence proving that the electronic signature does exist. Therefore, the user cannot deny the existence of the previously submitted electronic signature. Moreover, in the above entire scheme, only the legal signature user can submit the electronic signature, so the user cannot deny the identity of the submitter of the electronic signature. Therefore, compared with related art, the electronic signature in this solution has higher credibility.

The above is a feasible process of a blockchain-based electronic signature method disclosed in the present specification. In practical applications, the above method may also be combined with the following specific implementations to further obtain additional technical effects.

In the present specification, the legal signature user may be pre-bound to the electronic signature client for subsequent use. Specifically, the electronic signature client may send a binding request of the legal signature user to the server, and the binding request may carry the collected biometric information of a user to be bound and its identity identifier, so that the server can verify the identity identifier and biometric information of the user to be bound to determine whether the two indicate the same natural person. If yes, the above biometric information may be bound to the electronic signature client, and the above binding relationship may be stored.

Through the above solution, it may be ensured that the biometric information submitted by the user bound to the electronic signature client matches the user, so that the problem of stealing the identity or biometric information of others for maliciously binding may be avoided.

It is understandable that, in the above process of determining whether the biometric information of the user to be bound and the identity identifier of the user to be bound indicate the same natural person, when the server is preset with a database that can be used to query the correspondence between the biometric information and the identity identifier, the process may be directly completed by the above server. In other cases, the process may also be completed indirectly through a third-party certification authority. The specific implementation method may be selected by a person skilled in the art according to the actual situation.

In an illustrated implementation, the above server may send a verification request to the third-party certification authority, the verification request carrying the biometric information and the identity identifier of the user to be bound, so that the third-party certification authority, in response to the verification request, may inquiry biometric information corresponding to the identity identifier, and after the biometric information of the user to be bound is matched with the biometric information obtained by the inquiry, return a result of the matching. After that, it can be determined, according to the result of the matching, whether the biometric information of the user to be bound and the identity identifier of the user to be bound indicate the same natural person.

It is understandable that the third-party certification authority in the above example may be a public security network, or another service provider that can provide a service for inquiring correspondences between biometric information and identity identifiers, which may be specifically selected by a developer according to specific needs, and does not need to be limited in the present specification.

In the present specification, before the biometric information is authenticated, the electronic signature client or server may use liveness detection to ensure that the signature user is a real alive user. Specifically, the above liveness detection may include a dynamic detection focusing on responses of a signature user, and a static detection focusing on biometric information itself.

For example, the biometric information is preset as a facial image in the form of a video, then, each time the biometric information is collected, a randomly generated password may be output to the user, and the user may be asked to read the password, so that a captured video will contain mouth shape change information when the user reads the password. If the mouth shape change information matches the above randomly generated password, it is determined that the user succeeds in the liveness recognition.

The above detection process may be attributed to dynamic detection that focuses on user interaction and participation. Based on this idea, those skilled in the art can apply relevant technical means to design other forms of dynamic liveness detection methods, which are not further limited in the present specification.

For another example, the collected facial image may be compared with existing facial images on the Internet, or it may be determined whether the collected facial image is an existing image through watermark checking, thereby determining whether the user is an alive user. Specifically, if a watermark is found on the collected facial image, it may be determined that the facial image is an existing image instead of a facial image captured in real time, which proves that the user is not an alive user. If the collected facial image is the same as the existing facial image on the Internet, it may be determined that the facial image is not a facial image taken in real time, which also proves that the user is not an alive user. The specific algorithms for judging the watermark and identical images may be obtained with reference to relevant technical literature, which do not need to be repeated in the present specification.

It is understandable that the above detection process may be attributed to static detection that focuses on biometric information itself. Based on this idea, those skilled in the art may apply relevant technical means to design other forms of static liveness detection methods to be applicable to biometric information in various forms, which is not further limited in the present specification.

Applying the above liveness detection method can ensure that the signature user is a real alive user, thereby ensuring that the collected biometric information is submitted by a real alive user, and to a certain extent avoiding the problem that some users fool the biometric recognition mechanism by stealing biometric information such as pictures and fingerprints of others.

In the present specification, after receiving the above binding request, the above server may detect whether the binding request is a network attack, thereby shielding the above network attack and improving the security of the server. Specifically, in the above scenario, common network attacks may include repeated requests, invalid requests, and the like with a quantity that exceeds a threshold. A corresponding detection method may be a blacklist-based or feature-based detection. Those skilled in the art may choose and design the specific network attack detection method to be adopted according to specific needs, which does not need to be specifically limited in the present specification.

For example, within a preset period of time, if the quantity of binding requests issued by an IP address exceeds a preset threshold, it can be determined that the IP is launching a network attack on the server, and the IP is placed in the blacklist. When a binding request from the IP is received subsequently, it may be blocked directly.

For another example, if it is known that a certain type of network attack will contain a specific field, the field may be added to the above feature database in advance, and subsequently, once it is found that the binding request contains this field, the binding request may be determined as a network attack and then blocked.

In the present specification, the above electronic signature client may add other information to the electronic signature before sending the electronic signature to the server. The specific method of addition may be repackaging the above other information to generate a new electronic signature. It is also possible to embed the above information in an electronic signature by means of digital watermarking, etc. For specific implementation methods, those skilled in the art may refer to relevant technical documents, which are not further limited in the present specification.

In an illustrated implementation, the above electronic signature may also include a signature moment and/or recognized signature content. The above information is added to the electronic signature and participates in subsequent deposit. Then, when inquiring is needed, the above signature moment and/or the recognized signature content may be found as well by querying the electronic signature, which facilitates realization of functions such as information statistics and verification.

In the present specification, the electronic signature is published to the blockchain for deposit. The electronic signature may be directly stored in a distributed database of the blockchain. Alternatively, the electronic signature may be hashed, and the obtained hash value is stored only in the distributed database of the blockchain. Specifically, plaintext storage is convenient to increase transparency and facilitates publicity and supervision, but it may cause a waste of resources on the blockchain; however, storing the hash value may also meet the functional requirements of deposit and verification, but the original text cannot be directly obtained. **In** order to realize the inquiry for the original electronic signature, an off-chain database storing the original text of the original electronic signature may be used cooperatively. Those skilled in the art may design the specific deposit method according to specific needs, which does not need to be specifically limited in the present specification.

**In** an illustrated implementation, the above process of publishing the electronic signature to the blockchain for deposit may include the process of hashing the electronic signature, and publishing the obtained hash value of the electronic signature to the blockchain for deposit.

In an illustrated implementation, the above process of publishing the electronic signature to the blockchain for deposit may include the process of encrypting the electronic signature, and publishing the encrypted electronic signature to the blockchain for deposit.

Corresponding to the implementation of the above process, a blockchain-based electronic signature apparatus is further proposed in the present specification, which is applied to the server and the electronic signature client respectively.

Please refer to FIG. 4, a structural diagram of a blockchain-based electronic signature apparatus according to the present specification applied to a server is shown. The apparatus includes the following modules.

Authentication request receiving module 401 is configured to receive an electronic signature authentication request sent by an electronic signature client, wherein the electronic signature client is bound to one or more legal signature users, and the electronic signature authentication request includes biometric information of a signature user collected by the electronic signature client.

Signature user authentication module 402 is configured to, in response to the electronic signature authentication request, authenticate whether the signature user is a legal signature user bound to the electronic signature client based on the biometric information; and if yes, return an authentication result to the electronic signature client, so that the electronic signature client further prompts the signature user to perform an electronic signature operation in response to the authentication result.

Electronic signature deposit module 403 is configured to receive an electronic signature submitted by the signature user and collected by the electronic signature client, and publish the electronic signature to a blockchain for deposit.

In an illustrated implementation, the above apparatus may further include a binding request receiving module and a first binding module.

The binding request receiving module may be configured to receive a binding request of the legal signature user sent by the electronic signature client, wherein the binding request may include an identity identifier of a user to be bound and biometric information of the user to be bound collected by the electronic signature client.

The above first binding module may be configured to, in response to the binding request, determine whether the biometric information of the user to be bound and the identity identifier of the user to be bound indicate the same natural person; and if the same natural person is indicated, bind the biometric information of the user to be bound to the electronic signature client, and store a binding relationship.

In a shown implementation, the above first binding module may further send a verification request to a third-party certification authority, the verification request carrying the biometric information and the identity identifier of the user to be bound, so that the third-party certification authority, in response to the verification request, inquires biometric information corresponding to the identity identifier, and after the biometric information of the user to be bound is matched with the biometric information obtained by the inquiry, returns a result of the matching. After that, it can be determined, according to the result of the matching, whether the biometric information of the user to be bound and the identity identifier of the user to be bound indicate the same natural person.

It is understandable that the third-party certification authority in the above example may be a public security network, or another service provider that can provide a service for inquiring correspondences between biometric information and identity identifiers, which may be specifically selected by a developer according to specific needs, and does not need to be limited in the present specification.

In an illustrated implementation, a biometric information sample of a legal signature user bound to the electronic signature client is stored in the server. In this example, the above signature user authentication module 402 may further match the above biometric information with the biometric information sample stored in the server; and if the matching succeeds, the above signature user may be determined as the legal signature user bound to the electronic signature client.

In an illustrated implementation, the above biometric information may be a facial image.

In an illustrated implementation, the above electronic signature may include a signature handwriting of the user.

In an illustrated implementation, the above electronic signature may further include a signature moment and/or recognized signature content.

Please refer to FIG. 5, a structural diagram of a blockchain-based electronic signature apparatus applied to an electronic signature client according to the present specification is shown. The electronic signature client is bound to one or more legal signature users. The apparatus includes the following modules.

Biometric information collection module 501 is configured to collect biometric information of a signature user.

Authentication request sending module 502 is configured to send an electronic signature authentication request carrying the biometric information to a server, so that the server, in response to the electronic signature authentication request, authenticates whether the signature user is a legal signature user bound to the electronic signature client based on the biometric information; and if yes, returns an authentication result to the electronic signature client.

Electronic signature collection module 503 is configured to, in response to the authentication result, further prompt the signature user to perform an electronic signature operation, and collect an electronic signature submitted by the signature user.

Electronic signature sending module 504 is configured to send the electronic signature to the server, so that the server publishes the electronic signature to a blockchain for deposit.

In an illustrated implementation, the above process of authenticating, based on the above biometric information, whether the above signature user is a legal signature user bound to the above electronic signature client may specifically include matching the above biometric information with the biometric information sample stored in the server; and if the matching succeeds, determining the above signature user as the legal signature user bound to the electronic signature client.

In an illustrated implementation, the above apparatus may further include a second binding module. The module may first collect biometric information of a user to be bound, and acquire identity identifier of the above user to be bound; send a binding request of a legal signature user to the server, the binding request carrying the identity identifier of the user to be bound and the biometric information of the user to be bound, so that the server, in response to the binding request, determines whether the biometric information of the user to be bound and the identity identifier of the user to be bound indicate the same natural person, and in a case that the same natural person is indicated, binds the biometric information of the user to be bound to the electronic signature client, and stores a binding relationship.

In an illustrated implementation, the above process of determining whether the biometric information of the user to be bound and the identity identifier of the user to be bound indicate the same natural person may include first sending a verification request to a third-party certification authority, the verification request carrying the biometric information and the identity identifier of the user to be bound, so that the third-party certification authority, in response to the verification request, inquires biometric information corresponding to the identity identifier, and after the biometric information of the user to be bound is matched with the biometric information obtained by the inquiry, returns a result of the matching. After that, it can be determined, according to the result of the matching, whether the biometric information of the user to be bound and the identity identifier of the user to be bound indicate the same natural person.

In an illustrated implementation, the above process of publishing the electronic signature to the blockchain for deposit may include encrypting the electronic signature, and further publishing the encrypted electronic signature to the blockchain for deposit.

In an illustrated implementation, the above biometric information may be a facial image.

In an illustrated implementation, the above electronic signature may include a signature handwriting of the user.

In an illustrated implementation, the above electronic signature may further include a signature moment and/or recognized signature content.

A computer device is further provided in the embodiments of the present specification, which includes at least a memory, a processor, and a computer program stored on the memory and executable on the processor, wherein the processor, when executing the program, implements the foregoing blockchain-based electronic signature method applied to the server.

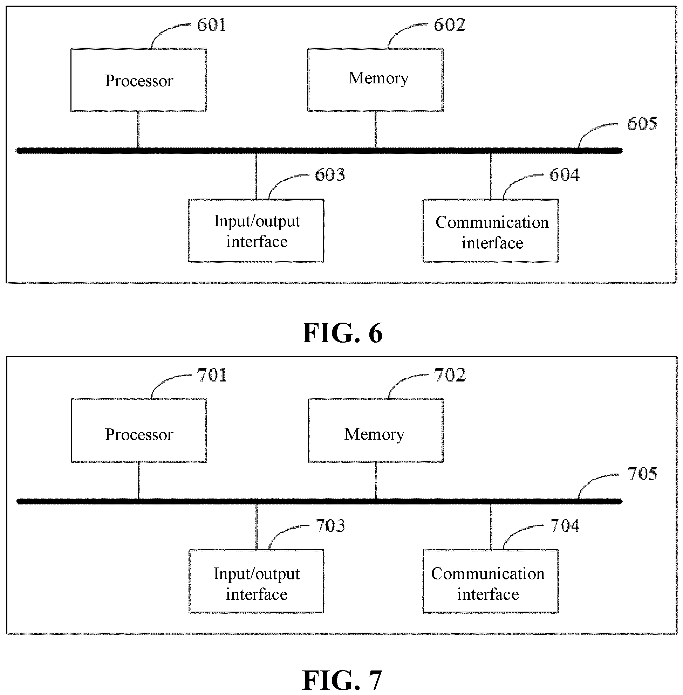

FIG. 6 is a schematic diagram of a more specific hardware structure of a computing device according to an embodiment of the present specification. The device may include: processor 601, memory 602, input/output interface 603, communication interface 604, and bus 605. Processor 601, memory 602, input/output interface 603, and communication interface 604 realize mutual communication connection in the device through bus 605.

Processor 601 may be implemented by a general-purpose Central Processing Unit (CPU), a microprocessor, an Application Specific Integrated Circuit (ASIC), or one or more integrated circuits, and for executing related programs to implement the technical solutions provided by the embodiments of the present specification.

Memory 602 may be implemented by a Read Only Memory (ROM), a Random Access Memory (RAM), a static storage device, a dynamic storage device, etc. Memory 602 may store an operating system and other application programs. When the technical solutions provided by the embodiments of the present specification are implemented by software or firmware, related program code is stored in memory 602 and is called and executed by processor 601.

Input/output interface 603 is configured to be connected to an input/output module to realize information input and output. The input/output module may be configured as a component in the device (not shown in the drawing), or may also be externally connected to the device to provide corresponding functions. An input device may include a keyboard, a mouse, a touch screen, a microphone, various sensors, etc., and an output device may include a display, a speaker, a vibrator, an indicator light, etc.

Communication interface 604 is configured to be connected to a communication module (not shown in the drawing) to implement communication interaction between the device and other devices. The communication module may realize communication in a wired mode (such as a USB and a network cable), or in a wireless mode (such as a mobile network, WIFI, and Bluetooth).

Bus 605 includes an access and transmits information between all components (such as processor 601, memory 602, input/output interface 603, and communication interface 604) of the device.

It should be noted that although the above device only shows processor 601, memory 602, input/output interface 603, communication interface 604, and bus 605, the device may also include other components necessary to achieve normal operation in a specific implementation process. In addition, those skilled in the art may understand that the above device may also include only the components necessary to implement the solutions of the embodiments of the present specification, rather than including all the components shown in the figures.

A computer device is further provided in the embodiments of the present specification, which includes at least a memory, a processor, and a computer program stored on the memory and executable on the processor, wherein the processor, when executing the program, implement the foregoing blockchain-based electronic signature method applied to an electronic signature client.

FIG. 7 is a schematic diagram of a more specific hardware structure of a computing device according to an embodiment of the present specification. The device may include: processor 701, memory 702, input/output interface 703, communication interface 704, and bus 705. Processor 701, memory 702, input/output interface 703, and communication interface 704 realize mutual communication connection in the device through bus 705.

Processor 701 may be implemented by a general-purpose Central Processing Unit (CPU), a microprocessor, an Application Specific Integrated Circuit (ASIC), or one or more integrated circuits, and for executing related programs to implement the technical solutions provided by the embodiments of the present specification.

Memory 702 may be implemented by a Read Only Memory (ROM), a Random Access Memory (RAM), a static storage device, a dynamic storage device, etc. Memory 702 may store an operating system and other application programs. When the technical solutions provided by the embodiments of the present specification are implemented by software or firmware, related program code is stored in memory 702 and is called and executed by processor 701.

Input/output interface 703 is configured to be connected to an input/output module to realize information input and output. The input/output module may be configured as a component in the device (not shown in the drawing), or may also be externally connected to the device to provide corresponding functions. An input device may include a keyboard, a mouse, a touch screen, a microphone, various sensors, etc., and an output device may include a display, a speaker, a vibrator, an indicator light, etc.

Communication interface 704 is configured to be connected to a communication module (not shown in the drawing) to implement communication interaction between the device and other devices. The communication module may realize communication in a wired mode (such as a USB and a network cable), or in a wireless mode (such as a mobile network, WIFI, and Bluetooth).

Bus 705 includes an access and transmits information between all components (such as processor 701, memory 702, input/output interface 703, and communication interface 704) of the device.

It should be noted that although the above device only shows processor 701, memory 702, input/output interface 703, communication interface 704, and bus 705, the device may also include other components necessary to achieve normal operation in a specific implementation process. In addition, those skilled in the art may understand that the above device may also include only the components necessary to implement the solutions of the embodiments of the present specification, rather than including all the components shown in the figures.

A computer-readable storage medium on which a computer program is stored is further provided in the embodiments of the present specification, and the program, when executed by a processor, performs the foregoing blockchain-based electronic signature method applied to a server.

A computer-readable storage medium on which a computer program is stored is further provided in the embodiments of the present specification, and the program, when executed by a processor, performs the foregoing blockchain-based electronic signature method applied to an electronic signature client.

The computer-readable medium includes permanent and non-permanent, removable and non-removable media, and can store information by any method or technology. The information may be computer-readable instructions, data structures, program modules, or other data. Examples of computer storage media include, but are not limited to, a phase change memory (PRAM), a static random access memory (SRAM), a dynamic random access memory (DRAM), other types of random access memories (RAM), read-only memories (ROM), electrically erasable programmable read-only memories (EEPROM), flash memories or other memory technologies, read-only compact disc read-only memories (CD-ROM), digital versatile disks (DVD) or other optical storage, magnetic tape cassettes, magnetic tape magnetic disk storage or other magnetic storage devices, or any other non-transmission media, and the computer storage media may be used to store information that may be accessed by computing devices. As defined herein, the computer-readable medium does not include transitory computer readable media (transitory media), such as a modulated data signal and a carrier.

It may be known from the description of the above implementations that those skilled in the art may clearly understand that the embodiments of the present specification may be implemented by means of software plus a necessary general hardware platform. Based on this understanding, the technical solutions of the embodiments of the present specification in essence or a part thereof making contributions to the prior art may be embodied in the form of software products, and the computer software products may be stored in a storage medium, such as ROM/RAM, magnetic disks, optical disks, etc., and include a plurality of instructions to enable a computer device (which may be a personal computer, server, or network device) to perform the methods described in the embodiments of the present specification or some parts of the embodiments.

The system, apparatus, module, or unit explained in the above embodiments may be specifically implemented by a computer chip or entity, or implemented by a product having a certain function. A typical implementation device is a computer, and the specific form of the computer may be a personal computer, a laptop computer, a cellular phone, a camera phone, a smart phone, a personal digital assistant, a media player, a navigation device, an email sending and receiving device, a game console, a tablet computer, a wearable device, or a combination of any of these devices.

The embodiments in the present specification are described in a progressive manner. The same or similar parts between the embodiments may be referred to by each other. Each embodiment focuses on differences from other embodiments. In particular, the apparatus embodiment is described relatively simply since it is basically similar to the method embodiment, and part of the description of the method embodiment may be referenced for relevant parts. The apparatus embodiment described above is only schematic, wherein the modules described as separate components may or may not be physically separated, and the functions of the modules may be implemented in the same or multiple pieces of software and/or hardware when the solutions of the embodiments of the present specification are implemented. Part or all of the modules may also be selected according to actual needs to achieve the purpose of the solution of the present embodiment. Those of ordinary skill in the art may understand and implement without creative effort.

The above is only specific implementations of the embodiments of the present specification. It should be pointed out that for those of ordinary skill in the art, several improvements and retouches may further be made without departing from the principles of the embodiments of the present specification.

## Claims

1. A blockchain-based electronic signature method, performed by a server, the method comprising:
receiving a binding request of a legal signature user sent by an electronic signature client, wherein the binding request comprises an identity identifier of a user to be bound and biometric information of the user to be bound collected by the electronic signature client;
in response to the binding request, determining whether the biometric information of the user to be bound and the identity identifier of the user to be bound indicate a same natural person; and if the same natural person is indicated, binding the biometric information of the user to be bound to the electronic signature client, and storing a binding relationship,
wherein the determining whether the biometric information of the user to be bound and the identity identifier of the user to be bound indicate the same natural person comprises:
sending a verification request to a third-party certification authority, the verification request carrying the biometric information and the identity identifier of the user to be bound, so that the third-party certification authority, in response to the verification request, inquires biometric information corresponding to the identity identifier, and after the biometric information of the user to be bound is matched with the biometric information obtained by the inquiry, returns a result of the matching; and
determining whether the biometric information of the user to be bound and the identity identifier of the user to be bound indicate the same natural person according to the result of the matching;
receiving (S201) an electronic signature authentication request sent by the electronic signature client, wherein the electronic signature client is bound to at least the legal signature user, and the electronic signature authentication request comprises biometric information of a signature user collected by the electronic signature client;
in response to the electronic signature authentication request, authenticating (S202) whether the signature user is a legal signature user bound to the electronic signature client based on the biometric information; and if yes, returning an authentication result to the electronic signature client, so that the electronic signature client further prompts the signature user to perform an electronic signature operation in response to the authentication result; and
receiving (S203) an electronic signature submitted by the signature user and collected by the electronic signature client, and publishing the electronic signature to a blockchain for deposit.

2. The method according to claim 1, wherein the server stores a biometric information sample of at least the legal signature user bound to the electronic signature client; and
the authenticating whether the signature user is a legal signature user bound to the electronic signature client based on the biometric information comprises:
matching the biometric information with the biometric information sample stored on the server; and if the matching is successful, determining that the signature user is a legal signature user bound to the electronic signature client.

3. The method according to claim 1, wherein
the publishing the electronic signature to a blockchain for deposit comprises:
encrypting the electronic signature, and further publishing the encrypted electronic signature to the blockchain for deposit.

4. The method according to claim 1, wherein the biometric information is a facial image.

5. The method according to claim 1, wherein the electronic signature comprises a signature handwriting of the signature user.

6. The method according to claim 5, wherein the electronic signature further comprises any one piece of information or a combination of several pieces of information shown in the following:
a signature moment; and
recognized signature content.

7. A server comprising at least a memory (602), a processor (601), and a computer program stored on the memory and executable on the processor, wherein the processor, when executing the program, implements the method according to any one of claims 1 to 6.

8. A computer program comprising instructions which, when executed by a server, cause the server to carry out the method according to any one of claims 1 to 6.

## Patentansprüche

1. Blockchain-basiertes elektronisches Signaturverfahren, das von einem Server durchgeführt wird, wobei das Verfahren umfasst:
Empfangen einer Bindungsanfrage eines Benutzers einer legalen Signatur, die von einem elektronischen Signatur-Client gesendet wird, wobei die Bindungsanfrage eine Identitätskennung eines zu bindenden Benutzers und biometrische Informationen des zu bindenden Benutzers, die von dem elektronischen Signatur-Client gesammelt werden, umfasst;
als Reaktion auf die Bindungsanfrage, Bestimmen, ob die biometrischen Informationen des zu bindenden Benutzers und die Identitätskennung des zu bindenden Benutzers eine gleiche natürliche Person angeben; und wenn die gleiche natürliche Person angegeben wird, Binden der biometrischen Informationen des zu bindenden Benutzers an den elektronischen Signatur-Client und Speichern einer Bindungsbeziehung,
wobei das Bestimmen, ob die biometrischen Informationen des zu bindenden Benutzers und die Identitätskennung des zu bindenden Benutzers die gleiche natürliche Person angeben, umfasst:
Senden einer Verifizierungsanfrage an eine Drittzertifizierungsstelle, wobei die Verifizierungsanfrage die biometrischen Informationen und die Identitätskennung des zu bindenden Benutzers trägt, so dass die Drittzertifizierungsstelle als Reaktion auf die Verifizierungsanfrage biometrische Informationen abfragt, die der Identitätskennung entsprechen, und nachdem die biometrischen Informationen des zu bindenden Benutzers mit den biometrischen Informationen, die durch die Abfrage erhalten werden, abgeglichen wurden, ein Ergebnis des Abgleichs zurückgibt; und
Bestimmen, ob die biometrischen Informationen des zu bindenden Benutzers und die Identitätskennung des zu bindenden Benutzers die gleiche natürliche Person gemäß dem Ergebnis des Abgleichs angeben;
Empfangen (S201) einer elektronischen Signaturauthentifizierungsanfrage, die von dem elektronischen Signatur-Client gesendet wird, wobei der elektronische Signatur-Client an mindestens den Benutzer der legalen Signatur gebunden ist und die elektronische Signaturauthentifizierungsanfrage biometrische Informationen eines Signaturbenutzers, die von dem elektronischen Signatur-Client gesammelt werden, umfasst;
als Reaktion auf die elektronische Signaturauthentifizierungsanfrage, Authentifizieren (S202), ob der Signaturbenutzer ein Benutzer der legalen Signatur ist, der an den elektronischen Signatur-Client gebunden ist, basierend auf den biometrischen Informationen; und wenn ja, Zurückgeben eines Authentifizierungsergebnisses an den elektronischen Signatur-Client, so dass der elektronische Signatur-Client den Signaturbenutzer ferner auffordert, einen elektronischen Signaturvorgang als Reaktion auf das Authentifizierungsergebnis durchzuführen; und
Empfangen (S2o3) einer elektronischen Signatur, die von dem Signaturbenutzer eingereicht und von dem elektronischen Signatur-Client gesammelt wird, und Veröffentlichen der elektronischen Signatur an eine Blockchain zur Hinterlegung.

2. Verfahren nach Anspruch 1, wobei der Server ein Sample biometrischer Informationen mindestens des Benutzers der legalen Signatur, der an den elektronischen Signatur-Client gebunden ist, speichert; und
das Authentifizieren, ob der Signaturbenutzer ein Benutzer der legalen Signatur ist, der an den elektronischen Signatur-Client gebunden ist, basierend auf den biometrischen Informationen umfasst:
Abgleichen der biometrischen Informationen mit dem Sample biometrischer Informationen, das auf dem Server gespeichert ist; und wenn der Abgleich erfolgreich ist, Bestimmen, dass der Signaturbenutzer ein Benutzer der legalen Signatur ist, der an den elektronischen Signatur-Client gebunden ist.

3. Verfahren nach Anspruch 1, wobei
das Veröffentlichen der elektronischen Signatur an eine Blockchain zur Hinterlegung umfasst:
Verschlüsseln der elektronischen Signatur und weiteres Veröffentlichen der verschlüsselten elektronischen Signatur an die Blockchain zur Hinterlegung.

4. Verfahren nach Anspruch 1, wobei die biometrischen Informationen ein Gesichtsbild sind.

5. Verfahren nach Anspruch 1, wobei die elektronische Signatur eine Signaturhandschrift des Signaturbenutzers umfasst.

6. Verfahren nach Anspruch 5, wobei die elektronische Signatur ferner eine beliebige Information oder eine Kombination von mehreren Informationen umfasst, die im Folgenden gezeigt werden:
einen Signaturmoment; und
erkannten Signaturinhalt.

7. Server, umfassend mindestens einen Speicher (602), einen Prozessor (601) und ein Computerprogramm, das in dem Speicher gespeichert ist und auf dem Prozessor ausführbar ist, wobei der Prozessor, wenn er das Programm ausführt, das Verfahren nach einem der Ansprüche 1 bis 6 implementiert.

8. Computerprogramm, umfassend Befehle, die, wenn sie von einem Server ausgeführt werden, den Server veranlassen, das Verfahren nach einem der Ansprüche 1 bis 6 auszuführen.

## Revendications

1. Procédé de signature électronique basé sur une chaîne de blocs, réalisé par un serveur, le procédé comprenant :
la réception d'une demande de liaison d'un utilisateur de signature légale envoyée par un client de signature électronique, dans lequel la demande de liaison comprend un identifiant d'identité d'un utilisateur devant être lié et des informations biométriques de l'utilisateur devant être lié collectées par le client de signature électronique ;
en réponse à la demande de liaison, la détermination si les informations biométriques de l'utilisateur devant être lié et l'identifiant d'identité de l'utilisateur devant être lié indiquent une même personne physique ; et si la même personne physique est indiquée, la liaison des informations biométriques de l'utilisateur devant être lié au client de signature électronique, et le stockage d'une relation de liaison,
dans lequel la détermination si les informations biométriques de l'utilisateur devant être lié et l'identifiant d'identité de l'utilisateur devant être lié indiquent la même personne physique comprend :
l'envoi d'une demande de vérification à une autorité de certification tierce, la demande de vérification transportant les informations biométriques et l'identifiant d'identité de l'utilisateur devant être lié, de sorte que l'autorité de certification tierce, en réponse à la demande de vérification, demande des informations biométriques correspondant à l'identifiant d'identité, et après que les informations biométriques de l'utilisateur devant être lié sont mises en correspondance avec les informations biométriques obtenues par la demande, renvoie un résultat de la mise en correspondance ; et
la détermination si les informations biométriques de l'utilisateur devant être lié et l'identifiant d'identité de l'utilisateur devant être lié indiquent la même personne physique selon le résultat de la mise en correspondance ;
la réception (S201) d'une demande d'authentification de signature électronique envoyée par le client de signature électronique, dans lequel le client de signature électronique est lié à au moins l'utilisateur de signature légale, et la demande d'authentification de signature électronique comprend des informations biométriques d'un utilisateur de signature collectées par le client de signature électronique ;
en réponse à la demande d'authentification de signature électronique, l'authentification (S202) si l'utilisateur de signature est un utilisateur de signature légale lié au client de signature électronique sur la base des informations biométriques ; et si oui, le renvoi d'un résultat d'authentification au client de signature électronique, de sorte que le client de signature électronique invite en outre l'utilisateur de signature à réaliser une opération de signature électronique en réponse au résultat d'authentification ; et
la réception (S203) d'une signature électronique soumise par l'utilisateur de signature et collectée par le client de signature électronique, et la publication de la signature électronique à une chaîne de blocs pour dépôt.

2. Procédé selon la revendication 1, dans lequel le serveur stocke un échantillon d'informations biométriques d'au moins l'utilisateur de signature légale lié au client de signature électronique ; et
l'authentification si l'utilisateur de signature est un utilisateur de signature légale lié au client de signature électronique sur la base des informations biométriques comprend :
la mise en correspondance des informations biométriques avec l'échantillon d'informations biométriques stocké sur le serveur ; et si la mise en correspondance réussit, la détermination que l'utilisateur de signature est un utilisateur de signature légale lié au client de signature électronique.

3. Procédé selon la revendication 1, dans lequel
la publication de la signature électronique à une chaîne de blocs pour dépôt comprend :
le chiffrement de la signature électronique, et en outre la publication de la signature électronique chiffrée à la chaîne de blocs pour dépôt.

4. Procédé selon la revendication 1, dans lequel les informations biométriques sont une image faciale.

5. Procédé selon la revendication 1, dans lequel la signature électronique comprend une écriture manuscrite de signature de l'utilisateur de signature.

6. Procédé selon la revendication 5, dans lequel la signature électronique comprend en outre un élément quelconque d'informations ou une combinaison de plusieurs éléments d'informations montrés dans ce qui suit :
un moment de signature ; et
un contenu de signature reconnu.

7. Serveur comprenant au moins une mémoire (602), un processeur (601), et un programme informatique stocké sur la mémoire et exécutable sur le processeur, dans lequel le processeur, lors de l'exécution du programme, met en œuvre le procédé selon l'une quelconque des revendications 1 à 6.

8. Programme informatique comprenant des instructions qui, lorsqu'elles sont exécutées par un serveur, amènent le serveur à réaliser le procédé selon l'une quelconque des revendications 1 à 6.
